# EUROPEAN PATENT APPLICATION

(11) **EP 1 363 419 A2**
(43) Date of publication of application: **19.11.2003**
(21) Application number: 03010921.9
(22) Date of filing: 15.05.2003
(51) Int. Cl.: H04J 14/02

(54) **Interleaving bi-directional optical add/drop multiplexer**

(30) Priority: 16.05.2002 KR 2002027146
(71) Applicant: SAMSUNG ELECTRONICS CO., LTD., Suwon-City, Kyungki-do (KR)
(72) Inventor: Joo, Young-Hoon, Paldal-gu, Suwon-city, Kyungki-do (KR); Hwang, Seong-Taek, Paldal-gu, Suwon-city, Kyungki-do (KR); Kim, Lae-Kyoung, Paldal-gu, Suwon-city, Kyungki-do (KR); Lee, Gyu-Woong, Paldal-gu, Suwon-city, Kyungki-do (KR)
(74) Representative: Grünecker, Kinkeldey, Stockmair & Schwanhäusser Anwaltssozietät

(57) **Abstract**

A bi-directional optical add/drop multiplexer is provided comprising a first interleaver for outputting to a second end a forward optical signal that has been inputted through a first end connected to the optical fiber, and a backward optical signal to a second end that has been inputted through a third end; a second interleaver for interleaving the forward optical signal inputted through a first end and the backward optical signal inputted through a second end by wavelengths, and outputting the interleaved signal through a third end; an optical add/drop multiplexing unit for adding a selected channel to the interleaved optical signal or dropping a selected channel from the interleaved optical signal; a third interleaver for outputting a backward optical signal among the channel-modified optical signals inputted through a second end to the third end of the first interleaver through a first end, and a forward optical signal through a third end; and a fourth interleaver for outputting a backward optical signal inputted through a second end connected to an optical fiber to the second end of the second interleaver through a first end, and the forward optical signal inputted from the third interleaver to the second end.

## Description

The present invention relates generally to a wavelength division multiplexing (WDM) optical transmission system, and in particular to an optical add/drop multiplexer included in the system, and a corresponding operation method.

A WDM optical transmission system improves efficiency by transmitting a plurality of channels having different wavelengths through one optical fiber, and transmits an optical signal regardless of a data rate, so that it is suitable for an ultrahigh speed internet network having an increased transmission capacity. In a long distance transmission using the WDM optical transmission system, the strength of the optical signal is reduced according to the distance it travels. Therefore, it is necessary to install optical amplifiers at predetermined intervals to amplify the reduced optical signal. In addition, when a channel's data rate is over 10Gb/s, chromatic dispersion occurs thereby reducing the quality of the optical signal. In the long distance transmission, the chromatic dispersion must be compensated for in each node. Since a point-to-point connection of an optical communication network fails to efficiently use the optical signal between two end nodes, there is a need for an optical add/drop multiplexer for dropping a desired channel from or adding a new channel to an intermediate node without having to make any electrical modifications.

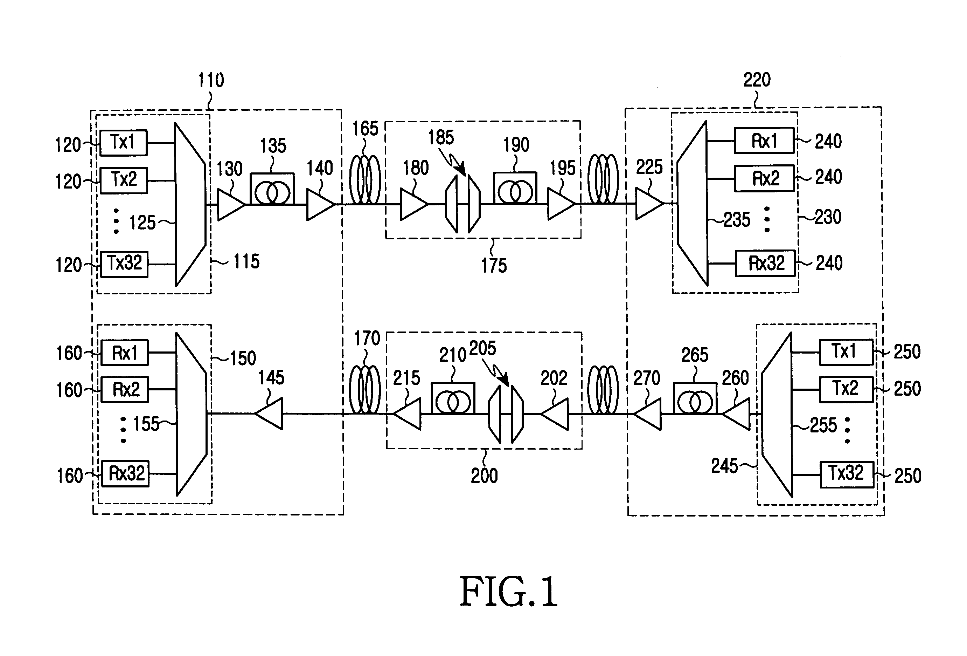

FIG. 1 illustrates a conventional WDM optical transmission system having a unidirectional optical add/drop multiplexer. The optical transmission system includes a first transmitting/receiving unit 110, forward and backward optical add/drop multiplexers 175 and 200, a second transmitting/receiving unit 220, and forward and backward optical fibers 165 and 170 for connecting the first transmitting/receiving unit 110 to the second transmitting/receiving unit 220.

The first transmitting/receiving unit 110 has a first optical transmitting unit 115, a first optical receiving unit 150, first, second and tenth optical amplifiers 130, 140 and 145, and a first dispersion compensation module (DCM) 135. The first optical transmitting unit 115 has a plurality of optical transmitters 120 for outputting channels having different wavelengths, and a first wavelength division multiplexer 125 for wavelength division multiplexing the plurality of channels from the plurality of optical transmitters 120 into forward optical signals.

The first and second optical amplifiers 130 and 140 amplify the inputted forward optical signal, and respectively include an Erbium doped fiber (EDF) for amplifying the inputted optical signal according to Erbium ion induced discharge, a pumping source for a pumping light for exciting Erbium ions, and a wavelength selective coupler for inputting the pumping light to the EDF.

The first DCM 135 compensates for chromatic dispersion of the inputted forward optical signal.

The tenth optical amplifier 145 amplifies the backward optical signal inputted through the backward optical fiber 170.

The first optical receiving unit 150 includes a first wavelength division inverse multiplexer 155 for inversely multiplexing the backward optical signal into a plurality of channels according to wavelengths, and a plurality of optical receivers 160 for respectively converting the inputted channels into electric signals.

The forward optical add/drop multiplexer 175 is composed of a third optical amplifier 180 for amplifying the inputted forward optical signal, a first optical add/drop multiplexing unit 185 for adding a new channel to the forward optical signal, or dropping a selected channel from the forward optical signal, a second DCM 190 for compensating for chromatic dispersion of the forward optical signal, and a fourth optical amplifier 195 for amplifying the forward optical signal.

The second transmitting/receiving unit 220 includes a second optical transmitting unit 245, a second optical receiving unit 230, fifth to seventh optical amplifiers 225, 260 and 270, and a third DCM 265.

The fifth optical amplifier 225 amplifies the forward optical signal inputted through the forward optical fiber 165.

The second optical receiving unit 230 has a second wavelength division inverse multiplexer 235 for inversely multiplexing the forward optical signal into a plurality of channels according to wavelengths, and a plurality of optical receivers 240 for respectively converting the inputted channels into electric signals.

The second optical transmitting unit 245 includes a plurality of optical transmitters 250 for outputting channels having different wavelengths, and a second wavelength division multiplexer 255 for wavelength division multiplexing the plurality of channels from the plurality of optical transmitters 250 into backward optical signals.

The sixth and seventh optical amplifiers 260 and 270 amplify the backward optical signal, and the third DCM 265 compensates for chromatic dispersion of the forward optical signal.

The backward optical add/drop multiplexer 200 includes an eighth optical amplifier 202 for amplifying the inputted backward optical signal, a second optical add/drop multiplexing unit 205 for adding a new channel to the backward optical signal or dropping a selected channel from the backward optical signal, a fourth DCM 210 for compensating for chromatic dispersion of the backward optical signal, and a ninth optical amplifier 215 for amplifying the backward optical signal.

As described above, the conventional unidirectional optical add/drop multiplexer divides the inputted wavelength division multiplexed optical signals by wavelengths through the use of the wavelength division inverse multiplexer, drops or adds a selected channel, and multiplexes the divided channels by using the wavelength division multiplexer.

On the other hand, the WDM optical transmission system using the unidirectional optical add/drop multiplexer requires at least two optical fibers for bi-directional communication. However, the identical wavelength band can be used because the transmission paths of the forward and backward optical signals (forward and backward optical fibers) are different. Therefore, optical amplifiers having the same wavelength band and performance are necessary.

However, the WDM optical transmission system using the unidirectional optical add/drop multiplexer cannot transmit many channels through one optical fiber due interference between adjacent channels when the channels have a narrow wavelength interval. Further, this type of prior art WDM system requires at least two optical fibers to perform the bi-directional communication. Accordingly, the required number of optical devices is doubled.

In order to improve efficiency of the optical fiber, a WDM optical transmission system has been proposed that includes a bi-directional optical add/drop multiplexer which can perform the bi-directional communication through one optical fiber.

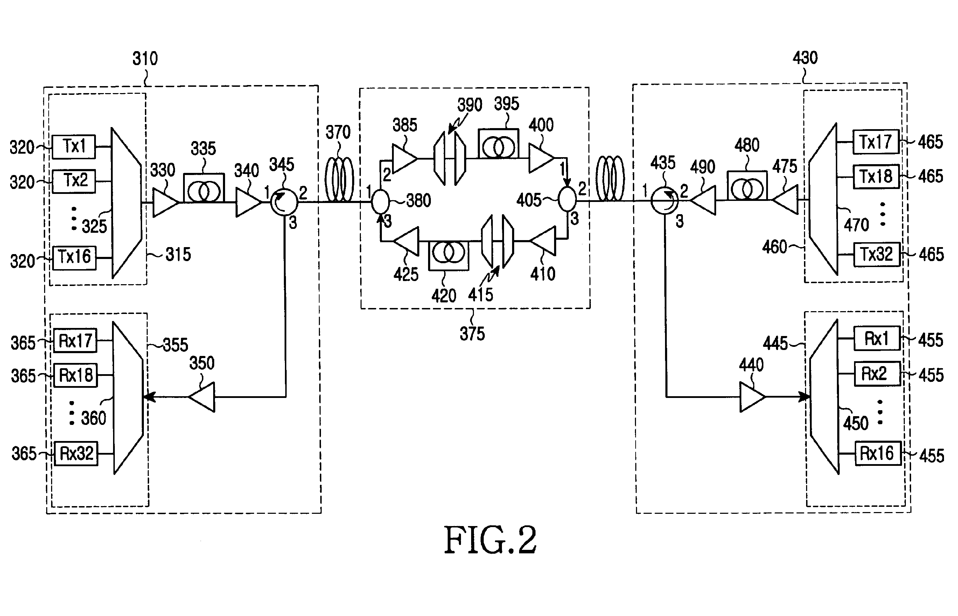

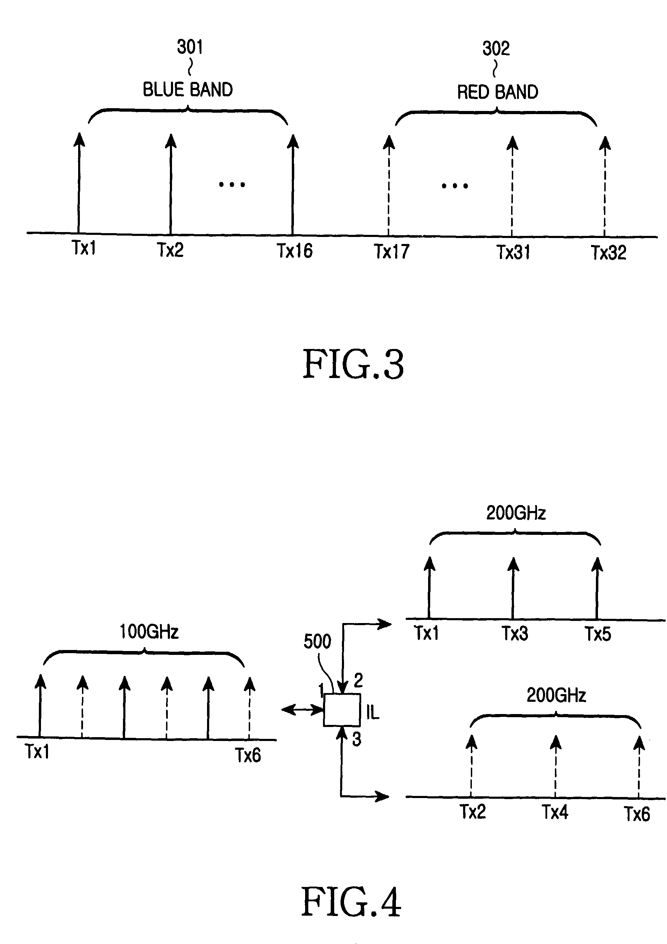

FIG. 2 is illustrates a prior art WDM optical transmission system including the proposed bi-directional optical add/drop multiplexer, and FIG. 3 illustrates a wavelength arrangement for the optical transmission system of FIG. 2. The optical transmission system includes a first transmitting/receiving unit 310, a bi-directional optical add/drop multiplexer 375, a second transmitting/receiving unit 430, and an optical fiber 370 for connecting the first transmitting/receiving unit 310 to the second transmitting/receiving unit 430.

The first transmitting/receiving unit 310 has a first optical transmitting unit 315, a first optical receiving unit 355, first to third optical amplifiers 330, 340 and 350, a first DCM 335 and a first circulator 345.

The first optical transmitting unit 315 includes a plurality of optical transmitters 320 for outputting channels having different wavelengths, and a first wavelength division multiplexer 325 for wavelength division multiplexing the plurality of channels from the plurality of optical transmitters 320 into forward optical signals.

The first and second optical amplifiers 330 and 340 amplify the inputted forward optical signal, and the first DCM 335 compensates for chromatic dispersion of the inputted forward optical signal.

The first circulator 345 outputs the forward optical signal inputted through a first end to a second end, and the backward optical signal inputted through the second end to a third end.

The third optical amplifier 350 amplifies the backward optical signal inputted through the first circulator 345.

The first optical receiving unit 355 is composed of a first wavelength division inverse multiplexer 360 for inversely multiplexing the amplified backward optical signal into a plurality of channels according to wavelengths, and a plurality of optical receivers 365 for respectively converting the inputted channels into electric signals.

The bi-directional optical add/drop multiplexer 375 includes first and second dense wavelength division multiplexing (DWDM) couplers 380 and 405, first to fourth optical amplifiers 385, 400, 410 and 425, first and second optical add/drop multiplexing units 390 and 415, and second and third DCMs 395 and 420. The first DWDM coupler 380 outputs the forward optical signal from the first circulator 345 to a second end, and the backward optical signal inputted through a third end to a first end. The fourth optical amplifier 385 and the fifth optical amplifier 400 amplify the inputted forward optical signal, the first optical add/drop multiplexing unit 390 adds a new channel to the forward optical signal or drops a selected channel from the forward optical signal, and the second DCM 395 compensates for chromatic dispersion of the forward optical signal.

The second DWDM coupler 405 outputs the forward optical signal inputted from the fifth optical amplifier 400 to a second end, and the backward optical signal inputted through the second end to a third end. The sixth optical amplifier 410 and the seventh optical amplifier 425 amplify the inputted backward optical signal, the second optical add/drop multiplexing unit 415 adds a new channel to the backward optical signal or drops a selected channel from the backward optical signal, and the third DCM 420 compensates for chromatic dispersion of the backward optical signal.

The second transmitting/receiving unit 430 includes a second optical transmitting unit 460, a second optical receiving unit 445, eighth to tenth optical amplifiers 440, 475 and 490, a fourth DCM 480 and a second circulator 435.

The second circulator 435 outputs the forward optical signal inputted through a first end to a second end, and the backward optical signal inputted through a third end to the first end.

The eighth optical amplifier 440 amplifies the inputted backward optical signal.

The second optical receiving unit 445 is composed of a second wavelength division inverse multiplexer 450 for inversely multiplexing the amplified forward optical signal into a plurality of channels according to wavelengths, and a plurality of optical receivers 455 for converting the inputted channels into respective electric signals.

The second optical transmitting unit 460 includes a plurality of optical transmitters 465 for outputting channels having different wavelengths, and a second wavelength division multiplexer 470 for wavelength division multiplexing the plurality of channels from the plurality of optical transmitters 465 into backward optical signals.

The ninth and tenth optical amplifiers 475 and 490 amplify the inputted backward optical signal, and the fourth DCM 480 compensates for chromatic dispersion of the inputted backward optical signal.

In the prior art WDM optical transmission system including the bi-directional optical add/drop multiplexer, the forward and backward optical signals can be simultaneously transmitted through one optical fiber between the first transmitting/receiving unit and the bi-directional optical add/drop multiplexer and between the bi-directional optical add/drop multiplexer and the second transmitting/receiving unit. However, since the bi-directional optical add/drop multiplexer is actually identical to the conventional unidirectional method using two optical fibers, it improves efficiency of the optical fiber but increases the required number of optical devices.

In the prior art wavelength arrangement of the WDM optical transmission system having the bi-directional optical add/drop multiplexer, the forward and backward optical signals cannot use the identical wavelength band as in the unidirectional method. That is, as illustrated in FIG 3, the wavelength band is divided into a short wavelength band (blue band 301) and a long wavelength band (red band 302), which is twice as wide as the unidirectional method.

It is the object of the present invention to provide an interleaving bi-directional optical add/drop multiplexer and a corresponding operation method to improve efficiency of an optical fiber, by efficiently using a wavelength band and reducing the required number of optical devices.

This object is solved by the subject matters of the independent claims.

Preferred embodiments are defined in the dependent claims.

One aspect of the present invention is to require fewer optical devices than the unidirectional device of FIG 1.

The present invention is a bi-directional optical transmission system comprising a plurality of first and a plurality of second transmitting/receiving units for transmitting and receiving an optical signal having a plurality of channels. The preferred embodiment of the present invention further comprises a bi-directional optical add/drop multiplexer connected through an optical fiber between the plurality of first and plurality of second transmitting/receiving units for adding or dropping a selected channel. The bi-directional optical add/drop multiplexer comprises a first interleaver for outputting a forward optical signal inputted through a first end connected to the optical fiber to a second end, and outputting a backward optical signal inputted through a third end to the first end. The bi-directional multiplexer further comprises a second interleaver for interleaving the forward optical signal inputted through the first end and the backward optical signal inputted through the second end by wavelengths, and outputting the interleaved signals through the third end. The bi-directional multiplexer also comprises an optical add/drop multiplexing unit for adding a selected channel to the interleaved optical signal or dropping a selected channel from the interleaved optical signal, a third interleaver for outputting the backward optical signal to the first interleaver through the first end and the forward optical signal through the third end among the channel-modified optical signals received through the second end, and a fourth interleaver for outputting the backward optical signal inputted through the second end connected to the optical fiber to the second interleaver through the first end and the forward optical signal inputted from the third interleaver to the second end.
FIG. 1 illustrates a prior art WDM optical transmission system having a unidirectional optical add/drop multiplexer.
FIG. 2 illustrates a prior art WDM optical transmission system having a bi-directional optical add/drop multiplexer.
FIG. 3 illustrates wavelength arrangement for the optical transmission system of FIG. 2.
FIG 4 illustrates operation of an interleaver in accordance with the present invention.
FIG. 5 illustrates a WDM optical transmission system including an interleaving bi-directional optical add/drop multiplexer in accordance with a first embodiment of the present invention.
FIG. 6 illustrates wavelength arrangement for the optical transmission system of FIG. 5.
FIG. 7 illustrates an interleaving bi-directional optical add/drop multiplexer in accordance with a second embodiment of the present invention.

Preferred embodiments of the present invention will be described herein below with reference to the accompanying drawings. For the purposes of clarity and simplicity, well-known functions or constructions are not described in detail as they would obscure the invention in unnecessary detail.

In the following discussions, each interleaver and coupler has a first, second and third end which are labeled 1, 2, and 3, respectively, in FIGs. 4, 5, and 7. In order to facilitate the discussion and reduce the complexity of the drawings in the discussion only these ends are related to their corresponding interleaver or coupler as follows. If an interleaver or coupler is numbered ### then the n^{th} end of the interleaver or coupler is referred to as ###n in the discussion while only the number n appears in the drawing representation of the interleaver or coupler, for n = 1-3.

FIG. 4 illustrates the operation of an interleaver in accordance with a preferred embodiment of the present invention. The interleaver 500 outputs odd channels of a wavelength division multiplexed optical signal inputted through a first end 5001 to a second end 5002 and even channels thereof to a third end 5003, and also outputs odd channels inputted through the second end 5002 and even channels inputted through the third end 5003 to the first end 5001.

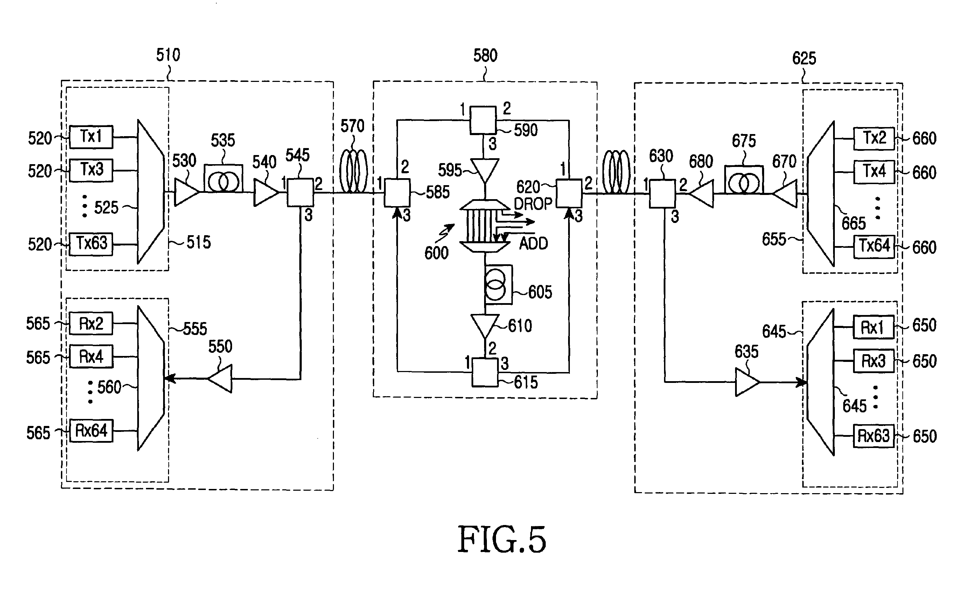

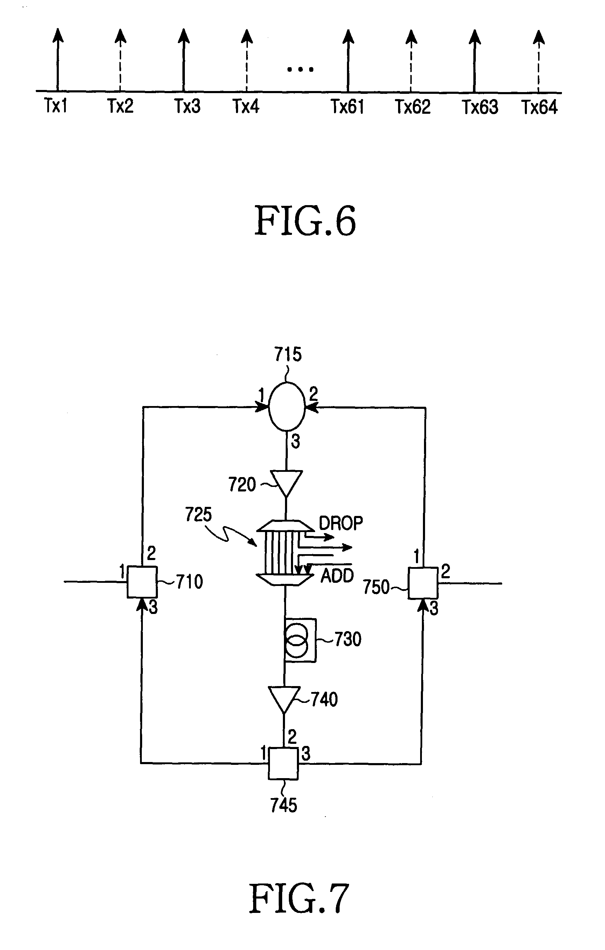

FIG. 5 illustrates a WDM optical transmission system comprising an interleaving bi-directional optical add/drop multiplexer in accordance with a first embodiment of the present invention, and FIG. 6 illustrates wavelength arrangement for the optical transmission system of FIG. 5.

The optical transmission system of the first embodiment comprises a first transmitting/receiving unit 510, a bi-directional optical add/drop multiplexer 580, a second transmitting/receiving unit 625, and an optical fiber 570 for connecting the first transmitting/receiving unit 510 to the second transmitting/receiving unit 625.

The first transmitting/receiving unit 510 comprises a first optical transmitting unit 515, a first optical receiving unit 555, first to third optical amplifiers 530, 540 and 550, a first DCM 535, and a first interleaver 545.

The first optical transmitting unit 515 comprises a plurality of optical transmitters 520 for outputting channels having different wavelengths, and a first wavelength division multiplexer 525 for wavelength division multiplexing the plurality of channels from the plurality of optical transmitters 520 into forward optical signals.

The first and second optical amplifiers 530 and 540 amplify the inputted forward optical signal, and the first DCM 535 compensates for chromatic dispersion of the inputted forward optical signal.

The first interleaver 545 outputs the forward optical signal inputted through a first end 5451 to a second end 5452 , and the backward optical signal inputted through the second end 5452 to a third end 5453.

The third optical amplifier 550 amplifies the backward optical signal inputted through the first interleaver 545.

The first optical receiving unit 555 comprises a first wavelength division inverse multiplexer 560 for inversely multiplexing the backward optical signal into a plurality of channels according to wavelengths, and a plurality of optical receivers 565 for respectively converting the inputted channels into electric signals.

The bi-directional optical add/drop multiplexer 580 comprises second to fifth interleavers 585, 590, 615 and 620, fourth and fifth optical amplifiers 595 and 610, an optical add/drop multiplexing unit 600 and a second DCM 605.

The second interleaver 585 outputs the forward optical signal inputted through a first end 5851 to a second end 5852, and the backward optical signal inputted through the second end 5852 to a third end 5853. At the second interleaver 585, the forward optical signal includes odd channels in the whole wavelength band of the optical transmission system, and the backward optical signal includes even channels.

The third interleaver 590 interleaves the forward optical signal inputted through a first end 5901 and the backward optical signal inputted through a second end 5902, and outputs the interleaved signals to a third end 5903.

The fourth optical amplifier 595 amplifies the interleaved signal from the third interleaver 590.

The optical add/drop multiplexing unit 600 adds a new channel to the interleaved optical signal, or drops a selected channel from the interleaved optical signal.

The second DCM 605 compensates for chromatic dispersion of the interleaved optical signal, and the fifth optical amplifier 610 amplifies the interleaved optical signal.

The fourth interleaver 615 outputs the backward optical signal to a first end 6151 and the forward optical signal to a third end 6153 among the interleaved optical signals inputted through a second end 6152.

The fifth interleaver 620 outputs the backward optical signal inputted through a second end 6202 to a first end 6201, and the forward optical signal inputted through a third end 6203 to the second end 6202.

The second transmitting/receiving unit 625 comprises a second optical transmitting unit 660, a second optical receiving unit 640, sixth to eighth optical amplifiers 635, 670 and 680, a third DCM 675, and a sixth interleaver 630.

The sixth interleaver 630 outputs the forward optical signal inputted through a first end 6301 to a third end 6303, and the backward optical signal inputted through a second end 6302 to the first end 6301.

The sixth optical amplifier 635 amplifies the inputted forward optical signal.

The second optical receiving unit 640 comprises a second wavelength division inverse multiplexer 645 for inversely multiplexing the forward optical signal into a plurality of channels according to wavelengths, and a plurality of optical receivers 650 for respectively converting the inputted channels into electric signals.

The second optical transmitting unit 655 comprises a plurality of optical transmitters 660 for outputting channels having different wavelengths, and a second wavelength division multiplexer 665 for wavelength division multiplexing the plurality of channels from the plurality of optical transmitters 660 into backward optical signals.

The seventh and eighth optical amplifiers 670 and 680 amplify the inputted backward optical signal, and the third DCM 675 compensates for chromatic dispersion of the inputted forward optical signal.

A wavelength arrangement for the optical transmission system of FIG 5 is illustrated in FIG. 6.

FIG. 7 illustrates an interleaving bi-directional optical add/drop multiplexer in accordance with a second embodiment of the present invention. The bi-directional optical add/drop multiplexer comprises first to third interleavers 710, 745 and 750, a coupler 715, first and second optical amplifiers 720 and 740, an optical add/drop multiplexing unit 725, and a DCM 730. Preferably the coupler 715 is a 3 dB coupler.

The first interleaver 710 outputs the forward optical signal inputted through a first end 7101 to a second end 7102, and the backward optical signal inputted through a third end 7103 to the second end 7102. At the first interleaver 710, the forward optical signal includes odd channels of the whole wavelength band of the optical transmission system, and the backward optical signal includes even channels.

The coupler 715, preferably a 3dB coupler, interleaves the forward optical signal inputted through a first end 7151 and the backward optical signal inputted through a second end 7152, and outputs the interleaved signals to a third end 7153.

The first optical amplifier 720 amplifies the interleaved optical signal from the 3dB coupler 715.

The optical add/drop multiplexing unit 725 adds a new channel to the interleaved optical signal, or drops a selected channel from the interleaved optical signal.

The DCM 730 compensates for chromatic dispersion of the interleaved optical signal, and the second optical amplifier 740 amplifies the interleaved optical signal.

The second interleaver 745 outputs the backward optical signal to a first end 7451 and the forward optical signal to a third end 7453 among the interleaved optical signals inputted through a second end 7452.

The third interleaver 750 outputs the backward optical signal inputted through a second end 7502 to a first end 7501, and the forward optical signal inputted through a third end 7503 to the second end 7502.

In accordance with the present invention, an interleaving bi-directional optical add/drop multiplexer provides the following advantages:

First, efficiency of the optical fiber is improved due to the bi-directional transmission, and the number of the optical devices required, such as the DCMS and optical amplifiers, is decreased which provides an economic advantage.

Second, the wavelength band is reduced by half by interleaving and transmitting the channels composing the forward and backward optical signals, thereby improving efficiency of the wavelength band.

Third, the number of the optical amplifiers is decreased thereby improving reliability of the optical transmission system.

While the invention has been illustrated in drawings and described with reference to certain preferred embodiments thereof, it will be understood by those skilled in the art that various changes in form and details may be made therein without departing from the scope of the invention as defined by the appended claims.

## Claims

1. A bi-directional optical add/drop multiplexer in a bi-directional optical transmission system which comprises a first and a second transmitting/receiving unit for transmitting and receiving an optical signal having a plurality of channels, the bi-directional optical add/drop multiplexer connected through an optical fiber between the first and second transmitting/receiving unit for adding or dropping a selected one of said plurality of channels, wherein the bi-directional optical add/drop multiplexer comprises:
a first interleaver for outputting a forward optical signal inputted through a first end connected to the optical fiber to a second end, and outputting a backward optical signal inputted through a third end to the first end;
a second interleaver for interleaving the forward optical signal inputted through a first end and the backward optical signal inputted through a second end by wavelengths, and outputting the interleaved signals through the third end;
an optical add/drop multiplexing unit for adding a selected channel to the interleaved optical signal or dropping the selected channel from the interleaved optical signal;
a third interleaver for outputting the backward optical signal to the first interleaver through a first end, and the forward optical signal through a third end among the channel-modified optical signals received through a second end; and
a fourth interleaver for outputting the backward optical signal inputted through a second end connected to an optical fiber to the second interleaver through a first end, and the forward optical signal inputted from the third interleaver to a third end.

2. The multiplexer as claimed in claim 1, further comprising:
a first optical amplifier, positioned between the second interleaver and the optical add/drop multiplexing unit, for amplifying the interleaved optical signal;
a second optical amplifier, positioned between the optical add/drop multiplexing unit and the third interleaver, for amplifying the interleaved optical signal.

3. The multiplexer as claimed in claim 2, further comprising a dispersion compensation module, positioned between the optical add/drop multiplexing unit and the second optical amplifier, for compensating for chromatic dispersion of the

4. A bi-directional optical add/drop multiplexer in a bi-directional optical transmission system including a first and a second transmitting/receiving unit for transmitting and receiving an optical signal having a plurality of channels, the bi-directional optical add/drop multiplexer connected through an optical fiber between the first and second transmitting/receiving unit for adding or dropping a selected channel, wherein the bi-directional optical add/drop multiplexer comprises:
a first interleaver for outputting a forward optical signal inputted through a first end connected to the optical fiber to a second end, and a backward optical signal inputted through a third end to the first end;
a coupler for interleaving the forward optical signal inputted through a first end and the backward optical signal inputted through a second end by wavelengths, and outputting the interleaved signal through a third end;
an optical add/drop multiplexing unit for adding a selected channel to the interleaved optical signal or dropping the selected channel from the interleaved optical signal;
a second interleaver for outputting the backward optical signal to the third end of the first interleaver through a first end, and the forward optical signal through a third end among the channel-modified optical signals received through a second end; and
a third interleaver for outputting a backward optical signal inputted through a second end connected to an optical fiber to the coupler through a first end, and the forward optical signal inputted from the second interleaver through a third end to the second end.

5. The multiplexer as claimed in claim 4, further comprising:
a first optical amplifier, positioned between the coupler and the optical add/drop multiplexing unit, for amplifying the interleaved optical signal; and
a second optical amplifier, positioned between the optical add/drop multiplexing unit and the second interleaver, for amplifying the interleaved optical signal.

6. The multiplexer as claimed in claim 5, further comprising a dispersion compensation module, positioned between the optical add/drop multiplexing unit and the second optical amplifier, for compensating for chromatic dispersion of the interleaved optical signal.

7. The multiplexer as claimed in one of claims 4 to 6, wherein the coupler is a 3dB coupler.

8. An operation method for a bi-directional optical add/drop multiplexer according to one of claims 1 to 7.
